# EUROPEAN PATENT APPLICATION

(11) **EP 2 124 065 A1**
(43) Date of publication of application: **25.11.2009**
(21) Application number: 08721685.9
(22) Date of filing: 10.03.2008
(51) Int. Cl.: G01N 35/02, B08B 3/02, G01N 1/00

(54) **CLEANING DEVICE AND AUTOMATIC ANALYZER**

(30) Priority: 14.03.2007 JP 2007065582
(71) Applicant: Olympus Corporation, Tokyo 151-0072 (JP)
(72) Inventor: TSURUTA, Hiroshi, Tokyo 151-0072 (JP)
(74) Representative: von Hellfeld, Axel
(86) International application number: PCT/JP2008/054269
(87) International publication number: WO 2008/126544

(57) **Abstract**

A cleaning device (20) includes a nozzle unit (21) that has a supply nozzle (211), a suction nozzle (213), and an overflow nozzle (215). An end of the suction nozzle (213) is located at a position slightly lower than an end of the supply nozzle (211) in a vertical direction. An end of the overflow nozzle (215) is located at a position higher than the end of the supply nozzle (211) in the vertical direction. The supply nozzle (211) has an inner diameter area larger than an area of a section where reaction liquid and cleaning water are held. The supply nozzle (211) is arranged such that there is provided a space between the outer wall surface of the supply nozzle (211) and the entire inner wall surface of a reaction vessel (C) to flow the cleaning water supplied from the supply nozzle 211 through the space. The cleaning water supplied from the supply nozzle (211) flows through the space between the outer wall surface of the supply nozzle (211) and the inner wall surface of the reaction vessel (C) and is sucked by the overflow nozzle (215).

## Description

### TECHNICAL FIELD

The present invention relates to a cleaning device and an automatic analyzer that includes the cleaning device.

### BACKGROUND ART

A conventionally known automatic analyzer dispenses a reagent and a specimen into a reaction vessel and optically detects reaction that occurs in the reaction vessel so as to analyze the specimen and the like. Furthermore, there has been known a cleaning device that is included in the automatic analyzer and cleans the reaction vessel after the analysis is completed (see Patent Document 1). According to a technology disclosed in Patent Document 1, it is possible to repeatedly use the reaction vessel by cleaning the reaction vessel each time the reaction vessel is used for the analysis.

Patent Document 1: Japanese Patent Application Laid-open No. S62-228951

### DISCLOSURE OF INVENTION

### PROBLEM TO BE SOLVED BY THE INVENTION

However, in the technology disclosed in Patent Document 1, a diameter of a supply nozzle that supplies cleaning liquid to inside of the reaction vessel is small relative to an inner diameter of the reaction vessel. Therefore, a sufficient flow of the cleaning liquid along an inner wall side surface of the reaction vessel cannot be formed to remove unwanted materials adhering to the inner wall side surface of the reaction vessel. Thus, there has been a problem that the inside of the reaction vessel cannot be sufficiently cleaned off.

The present invention is made to solve the above conventional problem and has an object to provide a cleaning device and an automatic analyzer that reliably form a sufficient flow of the cleaning liquid to remove the unwanted materials adhering to the inner wall side surface of the reaction vessel so that the unwanted materials inside the reaction vessel can be sufficiently cleaned off.

### MEANS FOR SOLVING PROBLEM

To solve the problem described above and achieve the object, a cleaning device according to the present invention, which is inserted into a vessel holding liquid and cleans inside of the vessel, includes: a supply nozzle that supplies cleaning liquid to the inside of the vessel for cleaning the inside of the vessel and is arranged to have a space between an outer wall surface of the supply nozzle and an entire inner wall surface of the vessel when the supply nozzle is inserted into the vessel; and a discharge nozzle that has an end positioned at an upper portion of the vessel and discharges the cleaning liquid supplied by the supply nozzle to outside of the vessel, wherein the supply nozzle has an inner diameter area larger than an area of a section where the liquid is held on a cross section of the vessel including a part of the supply nozzle inserted into the vessel.

In the cleaning device according to the present invention as set forth in the invention described above, the cleaning device further includes a timing control unit that controls a start timing of a discharge operation performed by the discharge nozzle and a start timing of a supply operation performed by the supply nozzle whereby the discharge operation performed by the discharge nozzle is started earlier than the supply operation performed by the supply nozzle.

In the cleaning device according to the present invention as set forth in the invention described above, a flow speed at which the cleaning liquid flows through the space between the outer wall surface of the supply nozzle and the entire inner wall surface of the vessel is faster than a supply speed at which the cleaning liquid is supplied from the supply nozzle to the inside of the vessel.

In the cleaning device according to the present invention as set forth in the invention described above, a cross-sectional shape of the supply nozzle is similar to a cross-sectional shape of the vessel.

In the cleaning device according to the present invention as set forth in the invention described above, the cleaning device further includes a suction nozzle that sucks the liquid held in the vessel before the supply nozzle supplies the cleaning liquid, wherein the suction nozzle is arranged inside the supply nozzle.

Further, an automatic analyzer according to the present invention includes the cleaning device described above.

### EFFECT OF THE INVENTION

According to the present invention, a cleaning device is inserted into a vessel holding liquid and cleans the inside of the vessel. A supply nozzle supplies cleaning liquid to the inside of the vessel for cleaning the inside of the vessel. On a cross section of the vessel, which includes a part of the supply nozzle inserted into the vessel, an inner diameter area of the supply nozzle is set to be larger than an area of a section where the liquid is held. The supply nozzle is arranged such that, when the supply nozzle is inserted into the inside of the vessel, there is provided a space between an outer wall surface of the supply nozzle and an entire inner wall surface of the vessel to flow the cleaning liquid through the space. Thus, a fast flow of the cleaning liquid supplied from the supply nozzle can be formed between the outer wall surface of the supply nozzle and the entire inner wall surface of the vessel, so that unwanted materials adhering to the inner wall surface of the vessel can be washed away and the unwanted materials inside the vessel can be sufficiently cleaned off.

### BRIEF DESCRIPTION OF DRAWINGS

FIG. 1 is a schematic diagram illustrating a configuration of an automatic analyzer.
FIG. 2 is a schematic diagram explaining a configuration of a cleaning device.
FIG. 3-1 is a diagram illustrating a state where a nozzle unit is moved to a cleaning position.
FIG. 3-2 is a cross-sectional view taken along a line A-A shown in FIG. 3-1.
FIG. 4 is a diagram explaining a size relationship between an area of a section, in which reaction liquid and cleaning water are held, and an inner diameter area of a supply nozzle.
FIG. 5 is a timing chart explaining a flow of an operation of each unit included in the cleaning device.
FIG. 6-1 is a diagram explaining a cleaning operation performed on a reaction vessel.
FIG. 6-2 is a diagram explaining the cleaning operation performed on the reaction vessel.
FIG. 7 is a diagram illustrating a modified example of the configuration of the supply nozzle.
FIG. 8 is a diagram illustrating another modified example of the configuration of the supply nozzle.
FIG. 9 is a diagram illustrating another modified example of the configuration of the supply nozzle.
FIG. 10 is a diagram illustrating another modified example of the configuration of the supply nozzle.
FIG. 11-1 is a diagram illustrating a modified example of the configuration of the nozzle unit.
FIG. 11-2 is a cross-sectional view taken along a line E-E shown in FIG. 11-1.

### EXPLANATIONS OF LETTERS OR NUMERALS

- 1: Automatic analyzer
- 2: Measurement system
- 11: Specimen transferring system
- 12: Specimen dispensing system
- 13: Reaction table
- 14: Reagent container
- 16: Reading device
- 17: Reagent dispensing system
- 18: Stirrer
- 19: Measurement optical system
- 20: Cleaning device
- 21: Nozzle unit
- 211: Supply nozzle
- 213: Suction nozzle
- 215: Overflow nozzle
- 217: Holder
- 221: Cleaning-water supply pump
- 223: Cleaning water tank
- 225: Water supply tube
- 231, 241: Waste liquid tank
- 233, 243: Waste-liquid suction pump
- 235, 245: Waste-liquid suction tube
- 251: Nozzle drive unit
- 3: Control unit
- C: Reaction vessel

### BEST MODE(S) FOR CARRYING OUT THE INVENTION

Preferred embodiments of the present invention will be described below in detail with reference to drawings.

### (Embodiments)

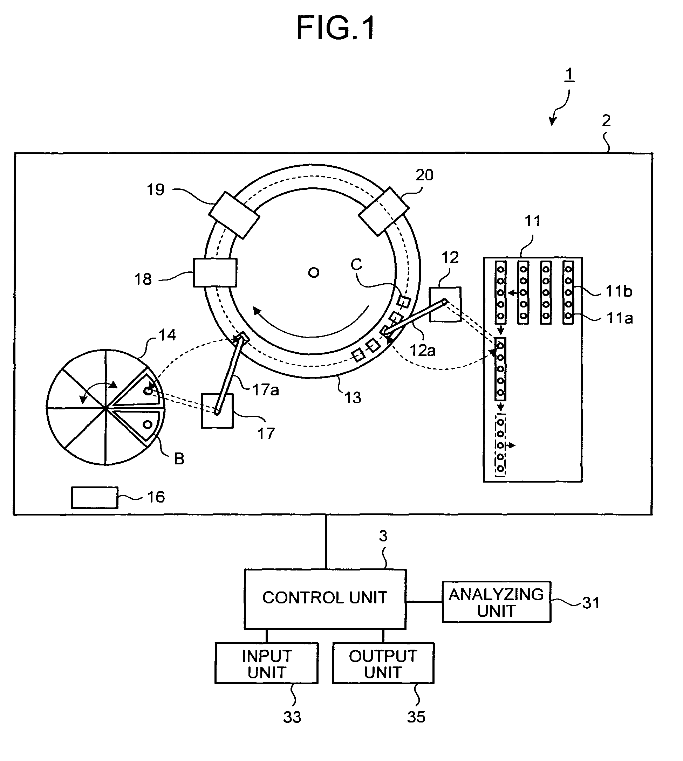

FIG. 1 is a schematic diagram illustrating a configuration of an automatic analyzer 1 according to an embodiment of the present invention. As shown in FIG. 1, the automatic analyzer 1 analyzes plural specimens biochemically, immunologically, and genetically in an automatic manner. The automatic analyzer 1 includes a measurement system 2 in which a specimen as an analysis object and a reagent are dispensed into a reaction vessel C and reaction that occurs in the reaction vessel C is optically measured. The measurement system 2 includes a specimen transferring system 11, a specimen dispensing system 12, a reaction table 13, a reagent container 14, a reading device 16, a reagent dispensing system 17, a stirrer 18, a measurement optical system 19, and a cleaning device 20.

The specimen transferring system 11 includes plural specimen racks 11b each holds plural specimen vessels 11a containing a specimen such as blood or urine and sequentially conveys the specimen vessels 11a in a direction indicated with an arrow in FIG. 1. The specimen in the specimen vessel 11a conveyed to a predetermined specimen suction position on the specimen transferring system 11 is dispensed into the reaction vessel C conveyed in array on the reaction table 13 by the specimen dispensing system 12.

The specimen dispensing system 12 includes an arm 12a that can be moved up and down in the vertical direction and rotated around the vertical line passing through a base end of the arm 12a as the center axis. A probe that sucks and discharges the specimen is attached to the arm 12a. The specimen dispensing system 12 causes the probe to suck the specimen from the specimen vessel 11a conveyed to the specimen suction position on the specimen transferring system 11. The specimen dispensing system 12 then rotates the arm 12a and causes the probe to discharge the specimen into the reaction vessel C conveyed to a specimen discharge position on the reaction table 13 thereby dispensing the specimen into the reaction vessel C. After finishing the dispensing, the probe included in the specimen dispensing system 12 is cleaned with running water in an unshown cleaning tank to which cleaning water is supplied.

The reaction vessels C in which the specimen and the reagent are dispensed are arranged on the reaction table 13. The reaction table 13 is rotatable around the center of the reaction table 13 as the rotation axis by an unshown drive mechanism under control of a control unit 3. The reaction table 13 conveys the reaction vessel C to each of the specimen discharge position, a reagent discharge position, a stir position, a photometric position, and a predetermined position under the cleaning device 20. The reaction table 13 is covered with an unshown disk-shaped cover. An unshown constant-temperature bath is arranged under the reaction table 13, so that a heat insulating bath that keeps an internal temperature at approximately body temperature is formed by the constant-temperature bath and the cover that covers the inside.

The reagent container 14 stores plural reagent vessels B each containing a predetermined reagent corresponding to an analytical item. The reagent container 14 is rotatable around the center of the reagent container 14 as the rotation axis by an unshown drive mechanism under control of the control unit 3 and conveys the desired reagent vessel B to a predetermined reagent suction position. The reagent container 14 is covered with an unshown disk-shaped cover. An unshown constant-temperature bath is arranged under the reagent container 14, so that a cool container that keeps the reagent contained in each of the reagent vessels B at a constant temperature state is formed by the constant-temperature bath and the cover that covers the inside. Thus, evaporation and degeneration of the reagent can be prevented.

The reading device 16 is arranged on the periphery side of the reagent container 14. The reading device 16 is, for example, a bar-code reader. The reading device 16 reads an unshown bar code attached to the reagent vessel B stored in the reagent container 14 thereby acquiring information about the reagent. The bar code attached to the reagent vessel B is generated by encoding reagent information about the reagent contained in the reagent vessel B in accordance with a predetermined format. The reagent information includes information, such as a name of the reagent, a lot number, and an expiration date, as appropriate. The reagent contained in the reagent vessel B is recognized and selected based on the reagent information acquired by the reading device 16.

The reagent dispensing system 17 performs an operation and has a configuration in the same manner as the specimen dispensing system 12. The reagent dispensing system 17 includes an arm 17a to which a probe that sucks and discharges the reagent is attached. The arm 17a can be moved up and down in the vertical direction and rotated around the vertical line passing through a base end of the arm 17a as the center axis. The reagent dispensing system 17 causes the probe to suck the reagent from the reagent vessel B conveyed to the reagent suction position on the reagent container 14. The reagent dispensing system 17 then rotates the arm 17a and causes the probe to discharge the reagent into the reaction vessel C conveyed to the reagent discharge position on the reaction table 13 thereby dispensing the reagent into the reaction vessel C. After finishing the dispensing, the probe included in the reagent dispensing system 17 is cleaned with running water in an unshown cleaning tank to which cleaning water is supplied.

The stirrer 18 stirs the specimen and the reagent dispensed in the reaction vessel C and conveyed to the stir position by using an unshown stir bar thereby facilitating reaction in the reaction vessel C. After the stirring is finished, the stir bar is cleaned with running water in an unshown cleaning tank to which cleaning water is supplied.

The measurement optical system 19 irradiates the reaction vessel C conveyed to the photometric position with light and receives light transmitted through a reaction liquid contained in the reaction vessel C thereby measuring intensity. A measurement result obtained by the measurement optical system 19 is output to the control unit 3 and analyzed by an analyzing unit 31.

The cleaning device 20 cleans the inside of the reaction vessel C as a cleaning object conveyed to the predetermined position under the cleaning device 20 after the measurement conducted by the measurement optical system 19 is finished in such a manner that the reaction liquid is sucked and discharged from the inside of the reaction vessel C and a cleaning material or cleaning liquid such as cleaning water is supplied to and sucked from the inside of the reaction vessel C. It this embodiment, a case is described in which the cleaning device 20 supplies and sucks the cleaning water thereby cleaning the inside of the reaction vessel C. The specimen is dispensed into the thus cleaned reaction vessel C again by the probe included in the specimen dispensing system 12 whereby the reaction vessel C is used for analysis.

The automatic analyzer 1 includes the control unit 3 that controls each unit included in the measurement system 2 and overall controls an operation of the whole automatic analyzer 1. The control unit 3 is formed by a microcomputer or the like that includes a built-in memory in which various types of data necessary for an operation of the automatic analyzer 1 as well as an analysis result are stored. The control unit 3 is arranged at an appropriate position within the automatic analyzer 1, although the control unit 3 is depicted outside of the automatic analyzer 1 as a matter of convenience as shown in FIG. 1. The control unit 3 is connected to the analyzing unit 31, and a measurement result obtained by the measurement optical system 19 is output to the analyzing unit 31 as appropriate. The analyzing unit 31 analyzes a constituent concentration of the specimen, or the like, based on the measurement result obtained by the measurement optical system 19. The analyzing unit 31 outputs an analysis result to the control unit 3. The control unit 3 is connected to an input unit 33 and an output unit 35. The input unit 33 includes an input device, such as a keyboard or a mouse, to input information necessary for analysis, for example, the number of specimens and an analytical item. The output unit 35 includes an output device, such as a display or a printer, to output an analysis result or display a warning.

In the automatic analyzer 1 having the above configuration, the specimen dispensing system 12 dispenses the specimen contained in the specimen vessel 11a into the reaction vessels C sequentially conveyed on the reaction table 13 and the reagent dispensing system 17 dispenses the reagent contained in the reagent vessel B into the reaction vessel C. After the stirrer 18 stirs the reagent and the specimen in the reaction vessel C thereby inducing reaction in the reaction vessel C, the measurement optical system 19 measures a spectral intensity of the specimen that is on the reaction state. The analyzing unit 31 then analyzes the measurement result thereby automatically performing componential analysis of the specimen, or the like. The cleaning device 20 cleans the reaction vessel C of which the measurement conducted by the measurement optical system 19 is finished, and then a series of analysis operations is continuously repeated.

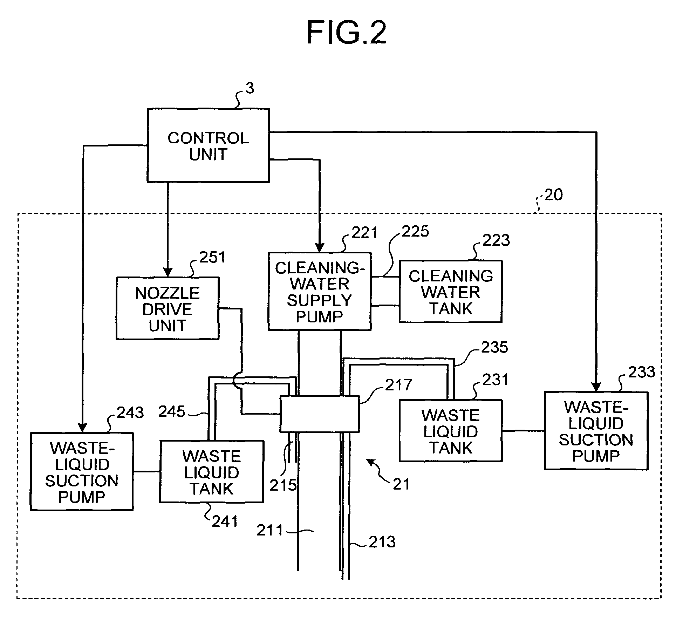

Next, the cleaning device 20 will be described. FIG. 2 is a schematic diagram explaining the configuration of the cleaning device 20.

As shown in FIG. 2, the cleaning device 20 includes a nozzle unit 21 including a supply nozzle 211, a suction nozzle 213, and an overflow nozzle 215 that is a discharge nozzle. An end of the suction nozzle 213 is located at a position slightly lower than an end of the supply nozzle 211 in the vertical direction. An end of the overflow nozzle 215 is located at a position higher than the end of the supply nozzle 211 in the vertical direction. Each of the nozzles 211, 213, and 215 included in the nozzle unit 21 is fixed by a holder 217 and located above the reaction vessel C as the cleaning object conveyed to a predetermined position on the reaction table 13.

The supply nozzle 211 is connected to a cleaning water tank 223 in which cleaning water such as purified water is stored via a water supply tube 225 equipped with a cleaning-water supply pump 221. The supply nozzle 211 supplies the cleaning water to the inside of the reaction vessel C as the cleaning object. The suction nozzle 213 is connected to a waste liquid tank 231 in which waste liquid is stored and a waste-liquid suction pump 233 via a waste-liquid suction tube 235. The suction nozzle 213 sucks the reaction liquid held in the reaction vessel C. The reaction liquid sucked by the suction nozzle 213 is discharged to outside via the waste liquid tank 231. The overflow nozzle 215 is connected to a waste liquid tank 241 in which waste liquid is stored and a waste-liquid suction pump 243 via a waste-liquid suction tube 245. The overflow nozzle 215 sucks the cleaning water supplied to the inside of the reaction vessel C by the supply nozzle 211 and discharges the cleaning water to outside of the reaction vessel C. The cleaning water sucked by the overflow nozzle 215 is discharged to outside via the waste liquid tank 241.

The cleaning device 20 includes a nozzle drive unit 251 that moves the nozzle unit 21 up and down so that the nozzle unit 21 is moved back and forth with respect to the inside of the reaction vessel C as the cleaning object.

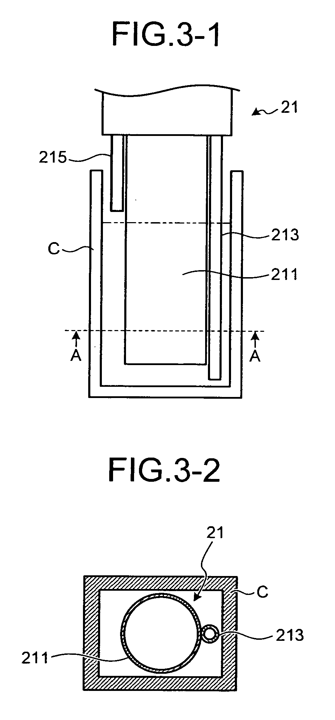

FIG. 3-1 is a diagram illustrating a state where the nozzle unit 21 is moved downward and inserted into the inside of the reaction vessel C as the cleaning object whereby the nozzle unit 21 is moved to a cleaning position. The side surface of the reaction vessel C is partially cut away so that the state inside of the reaction vessel C is shown in FIG. 3-1. FIG. 3-2 is a cross-sectional view taken along a line A-A shown in FIG. 3-1. As shown in FIG. 3-1, when the nozzle unit 21 is inserted into the inside of the reaction vessel C and moved to the cleaning position, the end of each of the supply nozzle 211 and the suction nozzle 213 is located near the bottom of the reaction vessel C. On the other hand, the end of the overflow nozzle 215 is located at a position slightly lower than an upper opening of the reaction vessel C. More specifically, a liquid level of the reaction liquid stored inside the reaction vessel C is indicated with a two-dot chain line in FIG. 3-1, and when the nozzle unit 21 is moved to the cleaning position, the end of the overflow nozzle 215 is located at a position higher than the liquid level of the reaction liquid in the vertical direction.

As shown in FIG. 3-2, the supply nozzle 211 is arranged such that there is provided a space between the outer wall surface of the supply nozzle 211 and the entire inner wall surface of the reaction vessel C to flow the cleaning water supplied from the supply nozzle 211 through the space, so that the space serves as a path for guiding the cleaning water to the upper portion of the reaction vessel C. In this manner, the cleaning water supplied from the supply nozzle 211 flows through the space between the outer wall surface of the supply nozzle 211 and the inner wall surface of the reaction vessel C and is sucked by the overflow nozzle 215.

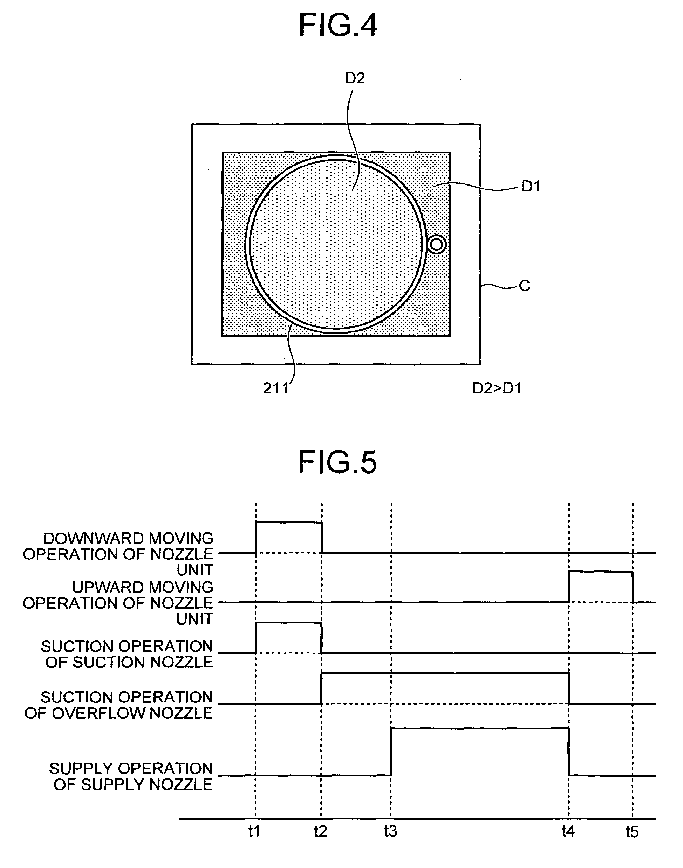

FIG. 4 is a diagram explaining a size relationship between an area of a section where the reaction liquid and the cleaning water are held and an inner diameter area of the supply nozzle 211 on cross section of the reaction vessel C including an part of the supply nozzle 211 inserted into the reaction vessel C. As shown in FIG. 4, an inner diameter area D2 of the supply nozzle 211 is larger than an area D1 of the section where the reaction liquid and the cleaning water are held. Thus, because the inner diameter of the supply nozzle 211 is large, a flow speed at which the cleaning water flows through the space is faster than a supply speed at which the cleaning water is supplied from the supply nozzle 211 to the inside of the reaction vessel C. In this manner, it is possible to ensure the flow speed of the cleaning water flowing from the bottom to the upper portion of the reaction vessel C. Therefore, a sufficient flow of the cleaning water on the entire area of the inner wall side surface of the reaction vessel C can be reliably formed so as to remove unwanted materials adhering to the inner wall side surface of the reaction vessel C.

As shown in FIG. 2, the control unit 3 controls an operation of each of the cleaning-water supply pump 221, the waste-liquid suction pumps 233 and 243, and the nozzle drive unit 251, so that the cleaning operation is performed on the reaction vessel C whereby the inside of the reaction vessel C is cleaned off.

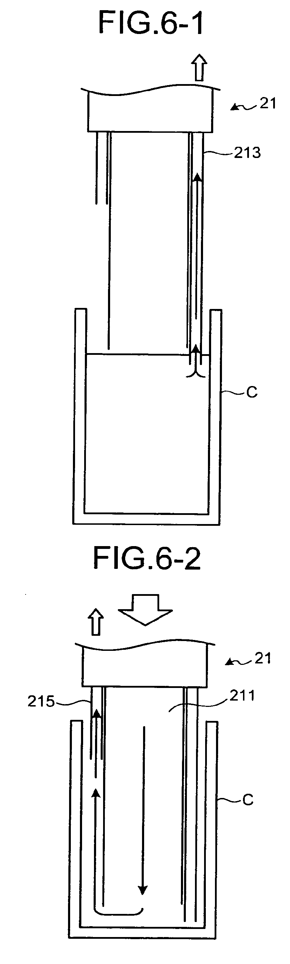

FIG. 5 is a timing chart explaining a procedure of an operation of each of the units included in the cleaning device 20 and indicates operation timings of the upward moving operation and the downward moving operation of the nozzle unit 21, the supply operation of the supply nozzle 211, the suction operation of the suction nozzle 213, and the suction operation of the overflow nozzle 215. FIGS. 6-1 and 6-2 are diagrams explaining the cleaning operation performed on the reaction vessel C.

As shown in FIG. 5, the control unit 3 first controls the nozzle drive unit 251 and the waste-liquid suction pump 233 thereby causing the downward moving operation of the nozzle unit 21 and the suction operation of the suction nozzle 213 to start simultaneously (t1). Thus, as shown in FIG. 6-1, while the suction nozzle 213 sucks the reaction liquid stored in the reaction vessel C, the nozzle unit 21 is moved downward from an initial position, sequentially inserted into the inside of the reaction vessel C, and moved to the cleaning position, as shown in FIG. 6-2.

When the nozzle unit 21 is moved to the cleaning position, the control unit 3 controls the nozzle drive unit 251 to stop the downward moving operation of the nozzle unit 21, controls the waste-liquid suction pump 233 to stop the suction operation of the suction nozzle 213, and controls the waste-liquid suction pump 243 to start the suction operation of the overflow nozzle 215 as shown in FIG. 5 (t2). After a predetermined time elapses since the suction operation of the overflow nozzle 215 is started, the control unit 3 controls the cleaning-water supply pump 221 to start the supply operation of the supply nozzle 211 (t3). A suction power of the overflow nozzle 215 is set to be larger than a supply power of the supply nozzle 211 in advance. As described above, there is provided a time interval between a start timing of the suction operation of the overflow nozzle 215 and a start timing of the supply operation of the supply nozzle 211 and the suction power of the overflow nozzle 215 is set to be larger than an injection power of the supply nozzle 211, so that it is possible to prevent the cleaning water from overflowing from the upper portion of the reaction vessel C. Alternatively, it is possible that the suction operation of the overflow nozzle 215 is started at a predetermined timing between the timing t1 and the timing t2 and when the suction operation of the waste-liquid suction pump 233 is stopped (t2), the supply operation of the supply nozzle 211 is started. Thus, as shown in FIG. 6-2, the cleaning water is supplied to the inside of the reaction vessel C from the supply nozzle 211. The cleaning water supplied from the supply nozzle 211 flows at the bottom of the reaction vessel C as indicated by an arrow shown in FIG. 6-2. The cleaning water then flows through the space between the outer wall surface of the supply nozzle 211 and the inner wall surface of the reaction vessel C and is sucked by the overflow nozzle 215.

When the cleaning of the inside of the reaction vessel C is finished by the above cleaning operation, the control unit 3 controls the waste-liquid suction pump 243 and the cleaning-water supply pump 221 to stop the suction operation of the overflow nozzle 215 and the supply operation of the supply nozzle 211, and controls the nozzle drive unit 251 to start the upward moving operation of the nozzle unit 21 as shown in FIG. 5 (t4). When the nozzle unit 21 is moved to the initial position above the reaction vessel C, the control unit 3 controls the nozzle drive unit 251 to stop the upward moving operation of the nozzle unit 21 (t5). Alternatively, it is possible that, after the control unit 3 stops the suction operation of the overflow nozzle 215 at the timing t4, the control unit 3 controls the waste-liquid suction pump 233 to start the suction operation of the suction nozzle 213 for a predetermined time before starting the upward moving operation of the nozzle unit 21. Thus, it is possible to suck the cleaning water remaining at the bottom of the reaction vessel C.

According to the embodiment as described above, the inner diameter area of the supply nozzle 211 that supplies the cleaning water to the inside of the reaction vessel C is set to be larger than the area of the section, in which the reaction liquid and the cleaning water are held, on cross section of the reaction vessel C including a part of the supply nozzle 211 inserted into the inside of the reaction vessel C. Further, the supply nozzle 211 is arranged such that there is provided the space between the outer wall surface of the supply nozzle 211 and the entire area of the inner wall surface of the reaction vessel C to flow the cleaning water supplied from the supply nozzle 211 through the space, so that a path for guiding the cleaning water to the upper portion of the reaction vessel C can be formed. Moreover, the flow speed at which the cleaning water flows through the space is faster than the supply speed at which the cleaning water is supplied from the supply nozzle 211 to the inside of the reaction vessel C. Therefore, it is possible to wash away the unwanted materials adhering to the inner wall side surface of the reaction vessel C and sufficiently clean off the unwanted materials inside the reaction vessel C. Furthermore, because the suction power of the overflow nozzle 215 is set to be larger than the supply power of the supply nozzle 211, it is possible to prevent the cleaning water from overflowing from the reaction vessel C.

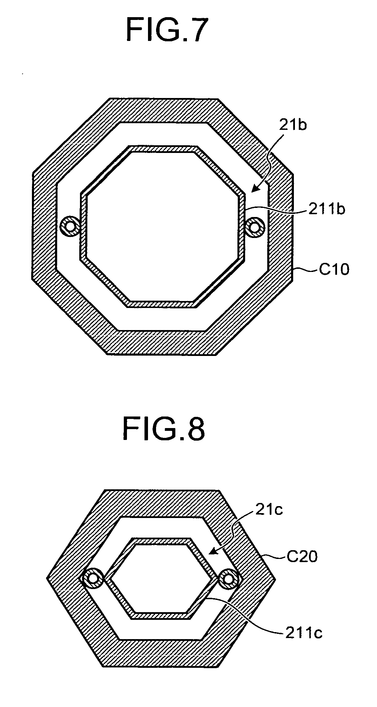

The configuration of the supply nozzle that supplies the cleaning water is not limited to the configuration according to the above embodiment. FIG. 7 is a diagram illustrating the configuration of a supply nozzle 211b according to a modified example and is a cross-sectional view of a reaction vessel C10 when a supply unit 21b including the supply nozzle 211b is moved to the cleaning position. As shown in FIG. 7, the supply nozzle 211b is formed such that a cross-sectional shape of the supply nozzle 211b is an octangular shape that is a cross-sectional shape of the reaction vessel C10, the outer diameter of the supply nozzle 211b is slightly smaller than the inner diameter of the reaction vessel C10, and the inner diameter area of the supply nozzle 211b is larger than a area of a section where the reaction liquid and the cleaning water are stored. According to the modified example, the flow speed at which the cleaning water flows through the space is faster than the supply speed at which the cleaning water is supplied from the supply nozzle 211b to the inside of the reaction vessel C10. Furthermore, because the cross-sectional shape of the supply nozzle 211b is similar to the cross-sectional shape of the reaction vessel C10, the cleaning water supplied from the supply nozzle 211b can uniformly flow through the space between the outer wall surface of the supply nozzle 211b and the inner wall surface of the reaction vessel C10. Therefore, it is possible to reliably remove the unwanted materials adhering to the inner wall side surface of the reaction vessel C10.

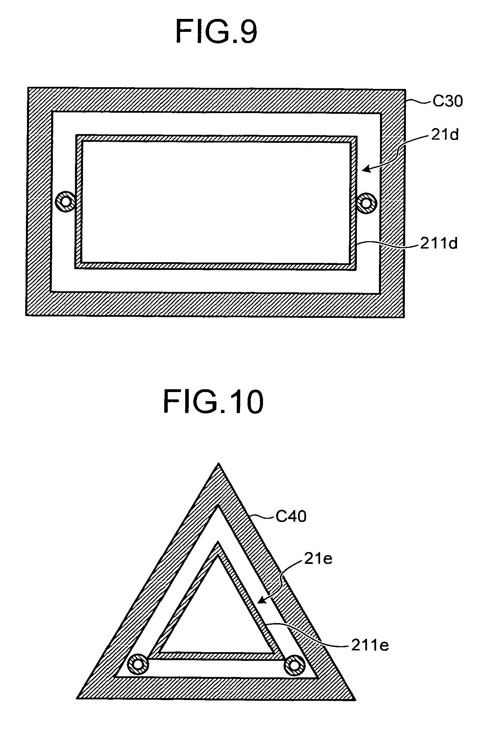

FIGS. 8 and 9 are diagrams illustrating other modified examples of the configuration of the supply nozzle. For example, as shown in FIG. 8, if the cross-sectional shape of a reaction vessel C20 is a hexagonal shape, it is possible to form a nozzle unit 21c by using a supply nozzle 211c having the hexagonal cross-sectional shape that is similar to the cross-sectional shape of the reaction vessel C20. Moreover, as shown in FIG. 9, if the cross-sectional shape of a reaction vessel C30 is a rectangular shape such as a rectangle, it is possible to form a nozzle unit 21d by using a supply nozzle 211d having the rectangular cross-sectional shape that is similar to the cross-sectional shape of the reaction vessel C30. Alternatively, as shown in FIG. 10, if the cross-sectional shape of a reaction vessel C40 is a triangular shape, it is possible to form a nozzle unit 21e by using a supply nozzle 211e having the triangular cross-sectional shape that is similar to the cross-sectional shape of the reaction vessel C40.

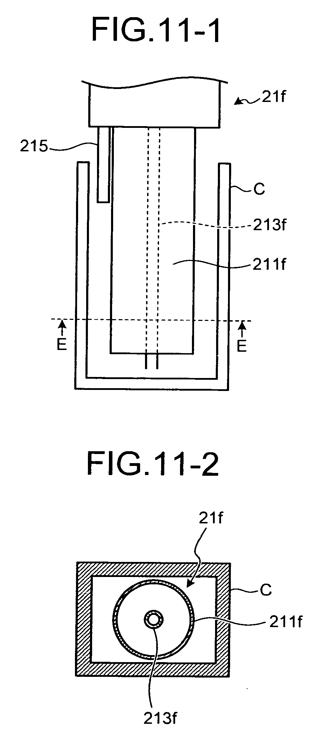

The configuration of the nozzle unit is not limited to the configuration of the nozzle unit 21 according to the above embodiment. FIG. 11-1 is a diagram illustrating a modified example of the configuration of the nozzle unit, and illustrates a state where a nozzle unit 21f according to the modified example is inserted into the inside of the reaction vessel C as the cleaning object and moved to the cleaning position. FIG. 11-2 is a cross-sectional view taken along a line E-E shown in FIG. 11-1. As shown in FIG. 11-2, the nozzle unit 21f includes a supply nozzle 211f, the overflow nozzle 215, and a suction nozzle 213f. The suction nozzle 213f is arranged inside the supply nozzle 211f such that the center axis of the suction nozzle 213f coincides with the center axis of the supply nozzle 211f.

As shown in FIG. 11-2, the supply nozzle 211f has an inner diameter area larger than an area of a section in which the reaction liquid and the cleaning water are stored. The supply nozzle 211f is arranged such that there is provided a space between the outer wall surface of the supply nozzle 211f and the entire area of the inner wall surface of the reaction vessel C to flow the cleaning water supplied from the supply nozzle 211f through the space, so that a path for guiding the cleaning water to the upper portion of the reaction vessel C is formed by the space.
In this manner, the cleaning water supplied from the supply nozzle 211f flows through the space between the outer wall surface of the supply nozzle 21f and the inner wall surface of the reaction vessel C and is sucked by the overflow nozzle 215, so that it is possible to ensure the flow speed of the cleaning water flowing from the bottom to the upper portion of the reaction vessel C and reliably form the flow of the cleaning water along the inner wall side surface of the reaction vessel C in the same manner as in the above embodiment. Furthermore, because the suction operation can be performed by the suction nozzle 213f at the center of the supply nozzle 211f, i.e., the center of the reaction vessel C, the suction operation can be performed in a balanced manner. For example, after the suction operation of the overflow nozzle 215 is stopped, the suction operation is performed by the suction nozzle 213 for a predetermined time, so that the cleaning water remaining at the bottom of the reaction vessel C can be sucked from every direction in a balanced manner.

Moreover, in the above embodiment, although there is provided the time interval between the start timing of the suction operation of the overflow nozzle 215 and the start timing of the supply operation of the supply nozzle 211 as described with reference to FIG. 5, these operations can be simultaneously started. In such a case, the suction power of the overflow nozzle 215 at the beginning of the operation is set to be sufficiently larger than that of the overflow nozzle 215 set in the case where there is provided the time interval with respect to the supply power of the supply nozzle 211.

Furthermore, although it is described in the above embodiment that the automatic analyzer 1 includes two reagent containers, the automatic analyzer 1 can include one reagent container.

### INDUSTRIAL APPLICABILITY

As described above, the cleaning device and the automatic analyzer according to the present invention are useful for cleaning off unwanted materials inside the reaction vessel, and particularly it is suitable for use in an automatic analyzer that dispenses a reagent and a specimen into a reaction vessel and optically detects reaction that occurs in the reaction vessel to analyze the specimen or the like.

## Claims

1. A cleaning device that is inserted into a vessel holding liquid and cleans inside of the vessel, the cleaning device comprising:
a supply nozzle that supplies cleaning liquid to the inside of the vessel for cleaning the inside of the vessel and is arranged to have a space between an outer wall surface of the supply nozzle and an entire inner wall surface of the vessel when the supply nozzle is inserted into the vessel; and
a discharge nozzle that has an end positioned at an upper portion of the vessel and discharges the cleaning liquid supplied by the supply nozzle to outside of the vessel, wherein
the supply nozzle has an inner diameter area larger than an area of a section where the liquid is held on a cross section of the vessel including a part of the supply nozzle inserted into the vessel.

2. The cleaning device according to claim 1, further comprising a timing control unit that controls a start timing of a discharge operation performed by the discharge nozzle and a start timing of a supply operation performed by the supply nozzle whereby the discharge operation performed by the discharge nozzle is started earlier than the supply operation performed by the supply nozzle.

3. The cleaning device according to claim 1, wherein a flow speed at which the cleaning liquid flows through the space between the outer wall surface of the supply nozzle and the entire inner wall surface of the vessel is faster than a supply speed at which the cleaning liquid is supplied from the supply nozzle to the inside of the vessel.

4. The cleaning device according to claim 1, wherein a cross-sectional shape of the supply nozzle is similar to a cross-sectional shape of the vessel.

5. The cleaning device according to claim 1, further comprising a suction nozzle that sucks the liquid held in the vessel before the supply nozzle supplies the cleaning liquid, wherein the suction nozzle is arranged inside the supply nozzle.

6. An automatic analyzer comprising the cleaning device according to any one of claims 1 to 5.
